# EUROPEAN PATENT SPECIFICATION

(11) **EP 2 098 276 B1**
(45) Date of publication and mention of the grant of the patent: **03.07.2013**
(21) Application number: 09250425.7
(22) Date of filing: 18.02.2009
(51) Int. Cl.: B01D 46/24

(54) **Plugged honeycomb structure**
Abgedichtete Wabenstruktur
Structure en nid d'abeille raccordée

(30) Priority: 20.02.2008 JP 2008038851
(43) Date of publication of application: 09.09.2009
(73) Proprietor: NGK Insulators, Ltd., Nagoya-City, Aichi Pref. 467-8530 (JP)
(72) Inventor: Ichikawa, Shuichi, Nagoya City Aichi-ken 467-8530 (JP); Mizutani, Takashi, Nagoya City Aichi-ken 467-8530 (JP)
(74) Representative: Paget, Hugh Charles Edward

(56) References cited:
- EP-A- 1 251 247
- EP-A- 1 559 878
- US-A1- 2005 103 232
- US-A1- 2008 202 086

## Description

### BACKGROUND OF THE INVENTION

### 1. Field of the Invention

The present invention relates to a plugged honeycomb structure which is preferably used as a diesel particulate filter.

### 2. Description of the Related Art

To prevent environmental pollution and improve environment, a filter is applied to the treatment of an exhaust gas, and a plugged honeycomb structure is frequently used as the filter for the treatment of the exhaust gas. To collect and remove, for example, a particulate matter (the PM detected as three components of organic solvent soluble components, soot and sulfates) included in the exhaust gas from a diesel engine or the like, a diesel particulate filter (DPF) is incorporated and used in an exhaust system of the diesel engine or the like, and the plugged honeycomb structure is used in this DPF.

The plugged honeycomb structure is usually provided with partition walls arranged to form a plurality of cells which passes through two end faces (an inlet end face and an outlet end face) to each other, and plugging portions arranged to plug cells in each of the two end faces. The plugging portions are usually present so as to plug the ends of the adjacent cells opposite to each other (each end of the two end faces on either side). When the plugged honeycomb structure is used as the DPF, the exhaust gas (a fluid) flows into the opened (unplugged) cells on the side of the inlet end face, penetrates the partition walls constituting filter layers, is discharged as a penetrated fluid into the opened (unplugged) cells on the side of the outlet end face, and is further discharged to the outside. When the exhaust gas penetrates the partition walls, the PM included in the exhaust gas is collected by the partition walls.

The plugged honeycomb structure according to the present invention is preferably used as such a DPF.

Examples of a prior document having the same theme as or a theme close to that of the present invention described later include JP Pat. No. 3867439 and JP-A-2004-154692.

Meanwhile, in the exhaust system in which the plugged honeycomb structure used as the DPF is installed, owing to the quality or degradation with lapse of time of an exhaust tube, broken metal pieces peeled from the exhaust tube, sputter depositions of a welded portion of the exhaust tube and the like sometimes flow as loads. In such a case, the broken metal pieces or the sputter depositions are larger than opening sizes of the cells of the plugged honeycomb structure, and therefore they roll on the side of the inlet end face of the plugged honeycomb structure owing to the vibration of the engine and vibration during vehicle running or the like, to gradually shave the partition walls and the plugging portions on the side of the inlet end face. That is, an erosion phenomenon might occur in the vicinity of the inlet end face of the plugged honeycomb structure. In this case, the plugging portions having thicknesses (depths) of about several mm disappear with an elapse of predetermined time, and the PM collection capability of the plugged honeycomb structure as the DPF remarkably deteriorates.

It is to be noted that in the invention disclosed in JP Pat. No. 3867439, it is suggested that one or both of the end faces should be densified. However, in this invention, not only the plugging portions but also the partition walls (a honeycomb structure) are densified. Therefore, in the dense partition walls at an inlet, the passage resistance of the exhaust gas increases, the soot agglomerates to close the opened cells, and the PM collection capability might deteriorate.

Moreover, in the invention disclosed in JP-A-2004-154692, it is suggested that the Young's modulus of each plugging portion should be set to a value smaller than that of each partition wall (the honeycomb structures. According to this invention, durability against a thermal stress improves. However, a material does not have a sufficient strength, a problem of erosion therefore remains unsolved, and the disappearance of the plugging portions might remarkably deteriorate the PM collection capability.

### SUMMARY OF THE INVENTION

The present invention has been developed in view of circumstances, and an object thereof is to provide a plugged honeycomb structure which is useful as a filter for an exhaust gas, particularly as a DPF for collecting a PM and the like from an exhaust gas from a diesel engine and which does not easily deteriorate the PM collection capability of the DPF even when used in an exhaust system where broken metal pieces, sputter depositions and the like flow as loads.

That is, first, according to the present invention, there is provided a plugged honeycomb structure comprising: a columnar honeycomb structure having porous partition walls forming a plurality of cells which passes through two end faces to each other; and plugging portions which plug the cells in the end faces, wherein the plugging portions have depths of 2.0 mm or more and 12 mm or less, plug punch out strengths per unit length in a range of 3 MPa/mm or more and 50 MPa/mm or less, hydraulic diameters of 0.95 mm or more and less than 2.20 mm and porosities of 40% or more and 80% or less.

In the plugged honeycomb structure according to the present invention, in many cases, the two end faces are constituted of an inlet end face on an inlet side of a fluid and an outlet end face on an outlet side of the fluid. The plugged honeycomb structure according to the present invention adopts a configuration where the plugging portions plug (openings of) predetermined cells of the plurality of cells which passes through the inlet end face to the outlet end face, in the inlet end face, and the plugging portions plug (openings of) the remaining cells in the outlet end face to form a houndstooth check pattern or a checkered pattern on the inlet end face and the outlet end face.

The plug punch out strength of each plugging portion per unit length is the strength of the plugging portion per unit length in such a direction connecting between the two end faces (a fluid flowing direction), specifically the strength described later in the paragraphs of examples.
The length of the plugging portion is equal to the depth thereof. It can be considered that the plugging portions only indicate lengths, but the plugging portions aligned in the end faces to plug the cells indicate the depth from the end faces.

The hydraulic diameter of each plugging portion is a value calculated by 4 × (sectional area)/(peripheral length) based on the sectional areas and the peripheral lengths of the plugging portions. Here, the sectional area (of the plugging portion) is the area of the shape (the sectional shape) of the plugging portion in a section vertical to such a direction connecting between the two end faces, and the peripheral length (of the plugging portion) is the length of the periphery of the shape of the plugging portion (the length of a closed line surrounding the shape).

In the plugged honeycomb structure according to the present invention, the plugging portions have the depths in a range of more preferably 5 mm or more and 12 mm or less, especially preferably 7 mm or more and 12 mm or less.

In the plugged honeycomb structure according to the present invention, the plugging portions have the plug punch out strength per unit length in a range of more preferably 5 MPa/mm or more and 40 MPa/mm or less, especially preferably 5 MPa/mm or more and 35 MPa/mm or less.

In the plugged honeycomb structure according to the present invention, the plugging portions have hydraulic diameters of more preferably 1.15 mm or more and 2.20 mm or less.

In the plugged honeycomb structure according to the present invention, the plugging portions have porosities of more preferably 40% or more and 70% or less, further preferably 40% or more and 60% or less, especially preferably 40% or more and 50% or less.

In the plugged honeycomb structure according to the present invention, the plugging portions have sectional areas of preferably 0.90 mm² or more and less than 4.12 mm².

In the plugged honeycomb structure according to the present invention, the plugging portions are preferably bonded to the partition walls with a length of 50% or more of the depth of each plugging portion.

The plugging portions are bonded to the partition walls with a length of more preferably 70% or more of the depth of each plugging portion, especially preferably 90% or more of the depth of the plugging portion.

In the plugged honeycomb structure according to the present invention, the shape (the sectional shape) of each cell appearing in the section vertical to such a direction connecting between the two end faces is preferably a polygonal or circular shape. Specific examples of the polygonal shape include a quadrangular shape, a hexagonal shape and an octagonal shape. Since the plugging portion plugs the cell, this cell naturally has the same section shape as that of the plugging portion.

The plugged honeycomb structure according to the present invention may adopt a configuration in which the cell sizes (the sectional areas of the cells) and/or the cell shapes (the sectional shapes of the cells) of the two end faces (the inlet end face and the outlet end face) are different from each other. When this configuration is adopted, the open area ratios of the two end faces (the inlet end face and the outlet end face) can be different from each other. Since the plugging portions plug the cells, the two end faces (the inlet end face and the outlet end face) naturally have different sizes (the sectional areas) and/or different shapes (the sectional shapes) of the plugging portions for plugging the cells).

When the cell shapes (the plugging portion shapes) are octagonal in the one end face and quadrangular in the other end face, it is preferable that an octagonal end face having a large open area ratio is the inlet end face and that a quadrangular end face is the outlet end face. That is the octagonal cells are opened and the quadrangular cells are plugged in the inlet end face, whereas the quadrangular cells are opened and the octagonal cells are plugged in the outlet end face. The volumes of the cells on an inlet side and the surface areas of the partition walls forming the cells increase, and a pressure loss at a time when soot or the like is deposited can be suppressed.

It is to be noted that in a case where all the cell shapes (the plugging portion shapes) are the same (e.g., the quadrangular shape), even when either end face is disposed on the inlet side, performance is not changed. Therefore, the direction of the plugged honeycomb structure as the DPF is usually not designated when mounted in an exhaust system of a car. In the plugged honeycomb structure according to the present invention, from a viewpoint of an erosion countermeasure, the only plugging portions on the side of the inlet end face may include characteristics. However, the plugged honeycomb structure as the DPF may actually be mounted on an inlet or an outlet in the exhaust system of the car. Therefore, the plugging portions of both the end faces preferably include the characteristics of the plugged honeycomb structure according to the present invention.

In the plugged honeycomb structure according to the present invention, the plugging portions for plugging the cells at the end faces are preferably obtained by filling the cells with a plugging slurry containing a sintering auxiliary agent including one or more elements selected from the group consisting of alkali earth metals, Al, Si and Fe and 0.1 mass% or more of an added dispersant, and then drying, or drying and firing the structure.

The plugged honeycomb structure according to the present invention may or may not have a segment structure. The segment structure is a structure where a columnar honeycomb structure having porous partition walls forming a plurality of cells which passes through two end faces to each other is one honeycomb segment, and a plurality of honeycomb segments are combined and integrally bonded to one another in a direction vertical to a cell communicating direction (the central axis direction of the columnar honeycomb segment).

Next, according to the present invention, there is provided a diesel particulate filter using any one of the above plugged honeycomb structures.

The plugged honeycomb structure according to the present invention comprises the columnar honeycomb structure having the porous partition walls forming the plurality of cells which passes through the two end faces to each other, and the plugging portions which plug the cells in the end faces. The plugging portions have depths of 2.0 mm or more and 12 mm or less, plug punch out strengths per unit length in a range of 3 MPa/mm or more and 50 MPa/mm or less, hydraulic diameters of 0.95 mm or more and less than 2.20 mm and porosities of 40% or more and 80% or less. Therefore, when the plugged honeycomb structure is used as the DPF, the plugging portions can be prevented from being shaved. Even when broken metal pieces peeled from an exhaust tube, sputter depositions of a welded portion of the exhaust tube and the like flow, and roll on the side of the inlet end face of the plugged honeycomb structure to cause an erosion phenomenon, any plugging portion usually does not disappear, and the PM collection capability of the DPF is kept, until a running distance of 240,000 km as a usual vehicle life is reached. Moreover, even when a large amount of PM is collected, any crack is not generated during regeneration.

When the plugged honeycomb structure falls under at least one of a case where the plugging portions have depths less than 2.0 mm, a case where the plugging portions have plug punch out strengths per unit length in a range less than 3 MPa/mm, a case where the plugging portions have hydraulic diameters less than 0.95 mm and a case where the plugging portions have porosities in excess of 80% and the plugged honeycomb structure is used as the DPF, the plugging portions are easily shaved by the broken metal pieces, the sputter depositions or the like, and the PM collection capability of the DPF might deteriorate before reaching a running distance of 240,000 km.

When the plugged honeycomb structure falls under at least one of a case where the plugging portions have depths in excess of 12 mm, a case where the plugging portions have plug punch out strengths per unit length in excess of 50 MPa/mm, a case where the plugging portions have hydraulic diameters of 2.20 mm or more and a case where the plugging portions have porosities less than 40%, the plugged honeycomb structure is used as the DPF and a large amount of PM is collected, cracks are easily generated owing to a thermal stress during the regeneration. In other words, to stably repeat the regeneration, the plugged honeycomb structure has to be regenerated so that an only small thermal stress is generated in a stage in which the amount of the collected PM is small, and the frequency of the regeneration increases. This might shorten the life of the DPF.

In the preferable configuration of the plugged honeycomb structure according to the present invention, the plugging portions have sectional areas of 0.90 mm² or more and less than 4.12 mm². Therefore, when the plugged honeycomb structure is used as the DPF, the plugging portions can be prevented from being shaved. The PM collection capability of the DPF can be kept until the running distance of 240,000 km as the usual vehicle life is reached. Moreover, even when a large amount of PM is collected, any crack is not generated during the regeneration.

In the preferable configuration of the plugged honeycomb structure according to the present invention, the plugging portions are bonded to the partition walls with a length of 50% or more of the depth of each plugging portion. Therefore, when the plugged honeycomb structure is used as the DPF, the plugging portions do not easily fall off.
Even when the broken metal pieces peeled from the exhaust tube, the sputter depositions of the welded portion of the exhaust tube and the like flow to impact the plugging portions, the plugging portions are firmly retained in the end faces, and the PM collection capability of the DPF is kept.

In the preferable configuration of the plugged honeycomb structure according to the present invention, the cell sizes (the sectional areas of the cells) and/or the cell shapes (the sectional shapes of the cells) of the two end faces (the inlet end face and the outlet end face) are different from each other. As described above, when the octagonal end face having a large open area ratio is the inlet end face and, for example, the quadrangular end face having a small open area ratio is the outlet end face, the volumes of the cells on the inlet side and the surface areas of the partition walls forming the cells increase, thereby producing an effect that the pressure loss at a time when the soot or the like is deposited can be suppressed. However, when the volume of the cell opened in the inlet end face is increased, the plugging portion present on the inlet side becomes small. This is because on the inlet side, the plugging portion for plugging the cell opened in the outlet end face and having a small volume is present. In this case, the small volume accelerates the shrinkage of the plugging portion on the inlet side in the depth direction due to the erosion. As a countermeasure against this erosion, the increasing of the depth of the plugging portion (the lengthening of the plugging portion) is also considered. However, in this case, an effective area through which the exhaust gas passes (the surface area of the partition wall) decreases, which offsets the above effect of suppressing the pressure loss and which might cause the rise of the pressure loss. Since the plugged honeycomb structure according to the present invention has a high plug punch out strength, the depth of the plugging portion does not have to be increased. In consequence, the open area ratio of the inlet end face can be increased and the open area ratio of the outlet end face can be decreased to enjoy the above effect of suppressing the pressure loss.

In the preferable configuration of the plugged honeycomb structure according to the present invention, the plugging portions for plugging the cells at the end faces are obtained by filling the cells with the plugging slurry containing a sintering auxiliary agent including one or more elements selected from the group consisting of alkali earth metals, Al, Si and Fe and 0.1 mass% or more of the added dispersant, and then drying, or drying and firing the structure. Therefore, the sintering auxiliary agent reinforces neck portions among particles, and develops strength in a sintering process, so that the plugging portions are not easily shaved.

### BRIEF DESCRIPTION OF THE DRAWINGS

Fig. 1 is a front view schematically showing one embodiment of a plugged honeycomb structure according to the present invention;
Fig. 2 is a sectional view schematically showing the embodiment of the plugged honeycomb structure according to the present invention;
Fig. 3 is a diagram showing the result of an example, that is, a graph showing a relation between a plug punch out strength per unit length and a PM emission limit distance and a relation between the plug punch out strength per unit length and a regeneration limit value;
Fig. 4 is a diagram showing the result of an example, that is, a graph showing a relation between a plugging portion depth and the PM emission limit distance and a relation between the plugging portion and the regeneration limit value;
Fig. 5 is a diagram showing the result of an example, that is, a graph showing a relation between a plugging portion porosity and the PM emission limit distance and a relation between the plugging portion porosity and the regeneration limit value;
Fig. 6 is a diagram schematically showing the embodiment of the plugged honeycomb structure according to the present invention, that is, a front view showing an enlarged part for explaining offset and partition wall thickness; and
Fig. 7 is a diagram schematically showing another embodiment of the plugged honeycomb structure according to the present invention, that is, a front view showing an enlarged part for explaining the offset and partition wall thickness.

### [Description of Reference Numerals]

1: PLUGGED HONEYCOMB STRUCTURE
2a, 2b: END FACE
3: CELL
4: PARTITION WALL
10: PLUGGING PORTION
20: OUTER PERIPHERAL WALL
50: HONEYCOMB STRUCTURE

### DESCRIPTION OF THE PREFERRED EMBODIMENT

Hereinafter, embodiments of the present invention will appropriately be described with reference to the drawings, but the present invention is not limited to these embodiments when interpreted. The present invention can variously be altered, modified, improved or replaced based on the knowledge of any person skilled in the art without departing from the scope of the present invention. For example, the drawings show the preferable embodiments according to the present invention, but the present invention is not restricted by any configuration or information shown in the drawings. To implement or verify the present invention, means similar or equivalent to means described in the present specification can be applied, but the preferable means is the following means.

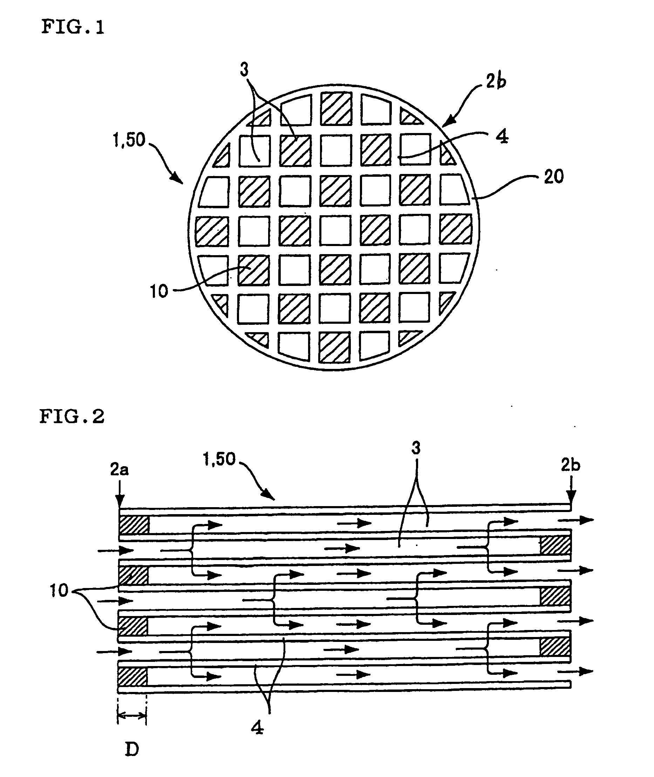

First, a plugged honeycomb structure according to the present invention will be described. Fig. 1 is a front view schematically showing one embodiment of the plugged honeycomb structure according to the present invention, that is, a diagram showing the end face of the plugged honeycomb structure having a columnar outer shape, and Fig. 2 is a sectional view schematically showing the embodiment of the plugged honeycomb structure according to the present invention, that is, a diagram showing the section of the plugged honeycomb structure having the columnar outer shape parallel to the central axis thereof.

A plugged honeycomb structure 1 shown in Figs. 1 and 2 includes a honeycomb structure 50 having porous partition walls 4 forming (defining) a plurality of cells 3 surrounded by an outer peripheral wall 20 and constituting flow paths of a fluid; and plugging portions 10 for plugging the ends of the cells 3 at two end faces 2a and 2b (of the plugged honeycomb structure 1). In other words, the plugged honeycomb structure 1 is provided with the plugging portions 10 for plugging the ends of the cells 3 at the two end faces 2a and 2b in the honeycomb structure 50.

In the plugged honeycomb structure 1, the plugging portions 10 have a depth D (see Fig. 2) of 2.0 mm or more and 12 mm or less. Moreover, the plugging portions 10 have plug punch out strengths per unit length in a range of 3 MPa/mm or more and 50 MPa/mm or less, the plugging portions 10 have hydraulic diameters of 0.95 mm or more and less than 2.20 mm, the plugging portions 10 have porosities of 40% or more and 80% or less, and the plugging portions 10 have sectional areas of 0.90 mm² or more and less than 4.12 mm². All portions of the plugging portions 10 are bonded to those of the partition walls 4. In other words, the plugging portions 10 are bonded to the partition walls 4 with a length of 100% of the depth D of each plugging portion 10.

The partition walls 4 are arranged so as to form the plurality of cells 3 which passes through the two end faces 2a (an inlet end face) and 2b (an outlet end face) to each other, and the plugging portions 10 are arranged so as to plug the cells 3 in the end face 2a or 2b of the plugged honeycomb structure 1. The plugging portions 10 are present so as to plug the ends of the adjacent cells 3 opposite to each other (each end on either side of the end faces 2a, 2b of the plugged honeycomb structure 1), and eventually the end faces of the plugged honeycomb structure 1 have a checkered pattern (a houndstooth check pattern) as shown in Fig. 1. Therefore, in the plugged honeycomb structure 1, the end face 2a (the inlet end face) and the end face 2b (the outlet end face) have an equal open area ratio.

when the plugged honeycomb structure 1 is used as a DPF, an exhaust gas (a fluid) flows into the opened cells 3 from the side of the one end face 2a (the inlet end face), penetrates the partition walls 4 as filter layers, is discharged as the penetrated fluid into the opened cells 3 on the side of the other end face 2b, and is discharged from the other end face 2b (the outlet end face) to the outside. When the exhaust gas penetrate the partition walls 4, a PM included in the gas is collected by the partition walls 4 (see Fig. 2).

The density of the cells 3 (the cell density) of the plugged honeycomb structure 1 is preferably 15 cells/cm² or more and less than 65 cells/cm², and the thicknesses of the partition walls 4 are preferably 200 µm or more and less than 600 µm. A pressure loss during PM deposition at a time when the plugged honeycomb structure is used as the DPF is decreased, as a filter area is large. Therefore, as the cell density is large, the pressure loss during the PM deposition decreases. On the other hand, the cell hydraulic diameters are decreased to increase the initial pressure loss. Therefore, from the viewpoint of the decrease of the pressure loss during the PM deposition, the cell density is preferably large, but from the viewpoint of the decrease of the initial pressure loss, the cell density is preferably small. When the thicknesses of the partition walls 4 are increased, a collection efficiency improves, but the initial pressure loss increases. The initial pressure loss, the pressure loss during the PM deposition and the tradeoff of the collection efficiency are taken into consideration to set the ranges of the cell density and the partition wall thicknesses which satisfy all requirements as described above.

The thermal expansion coefficient of the plugged honeycomb structure 1 (the honeycomb structure 50) at 40 to 800°C in the communicating direction of the cells 3 is preferably less than 1.0 × 10⁻⁶/°C, further preferably less than 0.8 × 10⁻⁶/°C, especially preferably less than 0.5 × 10⁻⁶/°C. When the thermal expansion coefficient at 40 to 800°C in the cell communicating direction is less than 1.0 × 10⁻⁶/°C, a thermal stress generated in a case where the plugged honeycomb structure used as the DPF is exposed to the exhaust gas at a high temperature can be suppressed in an allowable range, and breakdown due to the thermal stress is prevented.

As shown in Figs. 1 and 2, the plugged honeycomb structure 1 has a columnar (cylindrical) shape as the whole shape, and the shape of the cells 3 (the shape of the sections of the cells 3 cut along a plane (a plane parallel to the diametric direction of the plugged honeycomb structure 1) vertical to the communicating direction of the cells 3) and the sectional shape of the plugging portions are quadrangular. However, in the plugged honeycomb structure according to the present invention, there is not any special restriction on the whole shape and the cell shape (the sectional shape of the plugging portions). Examples of the whole shape include an elliptically columnar shape, an oblong post shape, a quadrangular post shape, a triangular post shape and another polygonal post shape. As the cell shape (the sectional shape of the plugging portions), an octagonal shape, a hexagonal shape, a triangular shape or the like may be adopted.

The outer peripheral wall 20 positioned in the outermost periphery of the plugged honeycomb structure 1 may be an integral wall formed integrally with portions constituted by the partition walls 4 during manufacturing (forming), or a cement coated wall obtained by grinding the outer peripheries of the portions constituted by the partition walls 4 to form a specific shape after the forming, and forming the outer peripheral wall of cement or the like.

Next, a method of manufacturing the plugged honeycomb structure according to the present invention will be described. First, an unplugged honeycomb structure (or honeycomb segment) is prepared, and a heretofore known method may be used as means for preparing the structure.
As one example of the method, a binder, a pore former, a surfactant, water as a solvent and the like are added to a main material to obtain a kneaded clay having plasticity, and this clay is extrusion-formed so as to obtain a predetermined honeycomb shape, followed by drying with microwaves, hot air or the like and firing. It is to be noted that the honeycomb structure may be fired before plugging the cells as described later (forming the plugging portions), or together with the firing of the plugging portions after plugging the cells.

As means for plugging the cells, a heretofore known method may be used. As one example of the method, after attaching a film to each end face of the honeycomb structure, holes having sizes adapted to the shape of the plugging portions to be formed are made by, for example, laser in positions of the film corresponding to the plugging portions, the end face of the honeycomb structure with the film attached thereto is immersed into a plugging slurry of a slurried material of the plugging portions, and the cells to be plugged are filled with the plugging slurry through the holes made in the film, dried, fired and hardened.

The main material is a material constituting the honeycomb structure (the partition walls), and from the viewpoints of strength and thermal resistance, it is preferable to use at least one selected from the material group consisting of silicon carbide (SiC), a silicon-silicon carbide based composite material, silicon nitride, cordierite, mullite, alumina, spinel, a silicon carbide-cordierite based composite material, lithium aluminum silicate, aluminum titanate and an Fe-Cr-Al based metal. Above all, the material made of silicon carbide (SiC) or the silicon-silicon carbide based composite material is especially preferable. As the binder, methyl cellulose, hydroxypropoxyl cellulose, hydroxyethyl cellulose, carboxymethyl cellulose or polyvinyl alcohol may be used.

When the plugged honeycomb structure according to the present invention is manufactured, it is essential to use, as the material of the plugging portions, a material containing at least one or preferably both of a sintering auxiliary agent including one or more elements selected from the group consisting of alkali earth metals, Al, Si and Fe and 0.1 mass% or more of an added dispersant. As the sintering auxiliary agent, an oxide including the above element, inorganic salt, or organic salt may be used. There is not any special restriction on the type of the dispersant, but specific examples of the dispersant include polycarboxylate, laurate, a cationic surfactant, an anionic surfactant, a non-ionic surfactant, stearic acid and acrylic acid based polymer. These materials improve wettability of interfaces between the plugging portions and the partition walls.

Moreover, when the plugged honeycomb structure according to the present invention is manufactured, to regulate or change the porosities of the plugging portions, the pore former is contained in the material of the plugging portions. There is not any special restriction on the type of the pore former, but specific examples of the pore former include flour, starch, phenol resin, polymethyl methacrylate, polyethylene, polyethylene terephthalate, an inorganic balloon such as a fly ash balloon, and a resin balloon. One or two or more pore formers may be combined and used in accordance with a purpose.

### [Examples]

Hereinafter, the present invention will further specifically be described in accordance with examples, but the present invention is not limited to these examples.

(Example 1) [Preparation of Honeycomb Structure] Silicon carbide powder and metal silicon powder were mixed at a mass ratio of 75:25, and methyl cellulose, hydroxypropoxyl methyl cellulose, surfactant and water were added thereto and kneaded to obtain a kneaded clay having plasticity. Then, the clay was extrusion-formed using a predetermined mold to obtain a formed honeycomb segment article including cells having a quadrangular (sectional shape), and having the quadrangular post shape as the whole shape. Subsequently, the resultant formed honeycomb segment article was dried with a microwave drier, further completely dried with a hot air drier and fired. Through such steps, a plurality of honeycomb segments (sintered articles) having a size of 36 mm square was obtained. Next, the peripheral surface of each honeycomb segment was coated with a bonding slurry obtained by kneading alumino silicate fiber, colloidal silica, polyvinyl alcohol and silicon carbide, and the segments were mutually assembled, pressed, heated and dried to obtain a bonded honeycomb segment article having the quadrangular post shape as the whole shape. Then, the bonded honeycomb segment article was ground and processed into a columnar shape, and the peripheral surface of the article was coated with an outer peripheral coat layer made of the same material as that of the formed honeycomb segment article, and dried to harden, thereby obtaining a columnar honeycomb structure having a segment structure.

[Preparation of Plugging Slurry] Silicon carbide powder and metal silicon powder were mixed at a mass ratio of 75:25, and methyl cellulose, hydroxypropoxyl methyl cellulose, sintering auxiliary agent, pore former and water were added thereto and kneaded to obtain a plugging slurry. Strontium carbonate was used as the sintering auxiliary agent. A resin balloon was used as the pore former. In the present example, any dispersant was not used.

[Preparation of Plugged Honeycomb Structure] The openings of cells of one end face of a honeycomb structure were alternately masked in a checkered pattern (a houndstooth check pattern). Specifically, an adhesive film was attached to the whole one end face of the honeycomb structure, and holes were made by laser in only portions of the adhesive film corresponding to the cells to be provided with the plugging portions. Moreover, the masked end face was immersed into the plugging slurry received in a container, to fill the cells in the positions corresponding to the holes with the plugging slurry. The other end face was similarly masked with a film, holes were made in portions of the film corresponding to the cells which were not provided with the plugging portions in the one end face, and the masked end face was immersed into the plugging slurry containing silicon carbide to fill the cells in the positions corresponding to the holes with the plugging slurry. Afterward, the honeycomb structure filled with the plugging slurry was dried by a hot air drier to obtain a plugged honeycomb structure having a diameter of 144 mm and a length of 152 mm (in a central axis direction). It is to be noted that three plugged honeycomb structures were prepared on the same conditions.

[Measurement of Plug Punch out Strength per Unit Length] A sample having a height of 30 mm and a section with a size of 30 × 30 mm was cut from the end face of the prepared plugged honeycomb structure. Then, Then, a punching rod having a diameter of 1 mm and a flat face configured to abut on the plugging portion was attached to a load cell (Rheometer manufactured by Fudou Manufacturing Co., Ltd.), and the sample was placed on an aluminum plate jig including holes having a diameter of 10 mm and having a thickness of 20 mm. Subsequently, the load cell was moved to attach the punching rod to the plugging portion, the plugging portion was gradually pressurized, and a pressure at a time when the punching rod crushed the plugging portion or the plugging portion fell off was obtained. The pressure was divided by the depth of the plugging portion to obtain a value as the plug punch out strength per unit length.

[Erosion Test] The prepared plugged honeycomb structure was coated with a catalyst in an amount of 30 g/L, used as a DPF and subjected to an erosion test. To perform this erosion test, the DPF was vertically mounted on the downstream side of an exhaust gas from a turbo charger of a vehicle on which a diesel engine having a displacement of 2.0 L was mounted, and five iron balls each having a diameter of 3 mm (simulation of sputter depositions peeled from an exhaust tube) were placed on the inlet end face of the DPF. When the engine was started, the iron balls rolled on the inlet end face of the DPF owing to vibration of the engine, and the plugging portions collided with the iron balls, and were gradually shaved. Moreover, an operation mode of a new European driving cycle (NEDC defined by European Gas Emission Measurement Method) was repeated to perform this erosion test. PM emission was measured every running of 5000 km in conformity to European Emission Regulation (Euro. 4), a running distance at which the value of the PM emission exceeded 25 mg/km was defined as a PM emission limit distance, and it was confirmed whether or not this PM emission limit distance exceeded a usual vehicle life target of 240,000 km.

[Regeneration Limit Test] The prepared plugged honeycomb structure was coated with the catalyst in an amount of 30 g/L, used as the DPF, and subjected to a regeneration limit test. First, the diesel engine having a displacement of 2.0 L was used, a diesel oxidation catalyst (DOC) and the DPF were mounted on the downstream side of the exhaust gas from the turbo charger, an engine operating condition was set to 2000 rotations•50 Nm, and soot was deposited on the DPF. Next, a gas temperature at an inlet of the DPF was raised to 650°C by post injection. When a pressure loss around the DPF started to drop, the engine operating condition was set to an idle state, and the post injection was simultaneously stopped. Afterward, the internal temperature of the DPF rapidly rose owing to a high oxygen concentration and a low exhaust gas flow rate. The amount of the soot to be deposited on the DPF was changed, and the amounts of the soot in a case where cracks were generated in the outlet end face of the DPF were compared. The amount of the soot in the case where the cracks were generated in the outlet end face of the DPF was obtained as the regeneration limit value, and it was confirmed whether or not the value exceeded a usual regeneration interval set lower limit value of 6 g/L.

Table 1 shows the plug punch out strength per unit length, the result (the PM emission limit distance) of the erosion test and the result (the regeneration limit value) of the regeneration limit test together with the partition wall thickness, the cell density, the offset and the porosity of each honeycomb structure, the depth, the porosity, the hydraulic diameter, the sectional area and the (sectional) shape of each plugging portion, the amount of the sintering auxiliary agent used in the plugging slurry and the amount of the dispersant used in the plugging slurry. The offset will be described later.

### (Examples 2 to 17 and Comparative Examples 1 to 5)

The amounts of a sintering auxiliary agent and a dispersant were appropriately changed to vary a plug punch out strength per unit length of a plugged honeycomb structure. As the dispersant, an acrylic copolymer which was a surfactant was used. Except these conditions, in the same manner as in Example 1, a plugged honeycomb structure was prepared, the plug punch out strength per unit length was measured, and an erosion test and a regeneration limit test were performed. Table 1 shows the plug punch out strength per unit length, the result (the PM emission limit distance) of the erosion test and the result (the regeneration limit value) of the regeneration limit test together with the partition wall thickness, the cell density, the offset and the porosity of the honeycomb structure, the depth, the porosity, the hydraulic diameter, the sectional area and the (sectional) shape of the plugging portion, the amount of the sintering auxiliary agent used in a plugging slurry and the amount of the dispersant used in the plugging slurry.

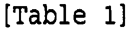

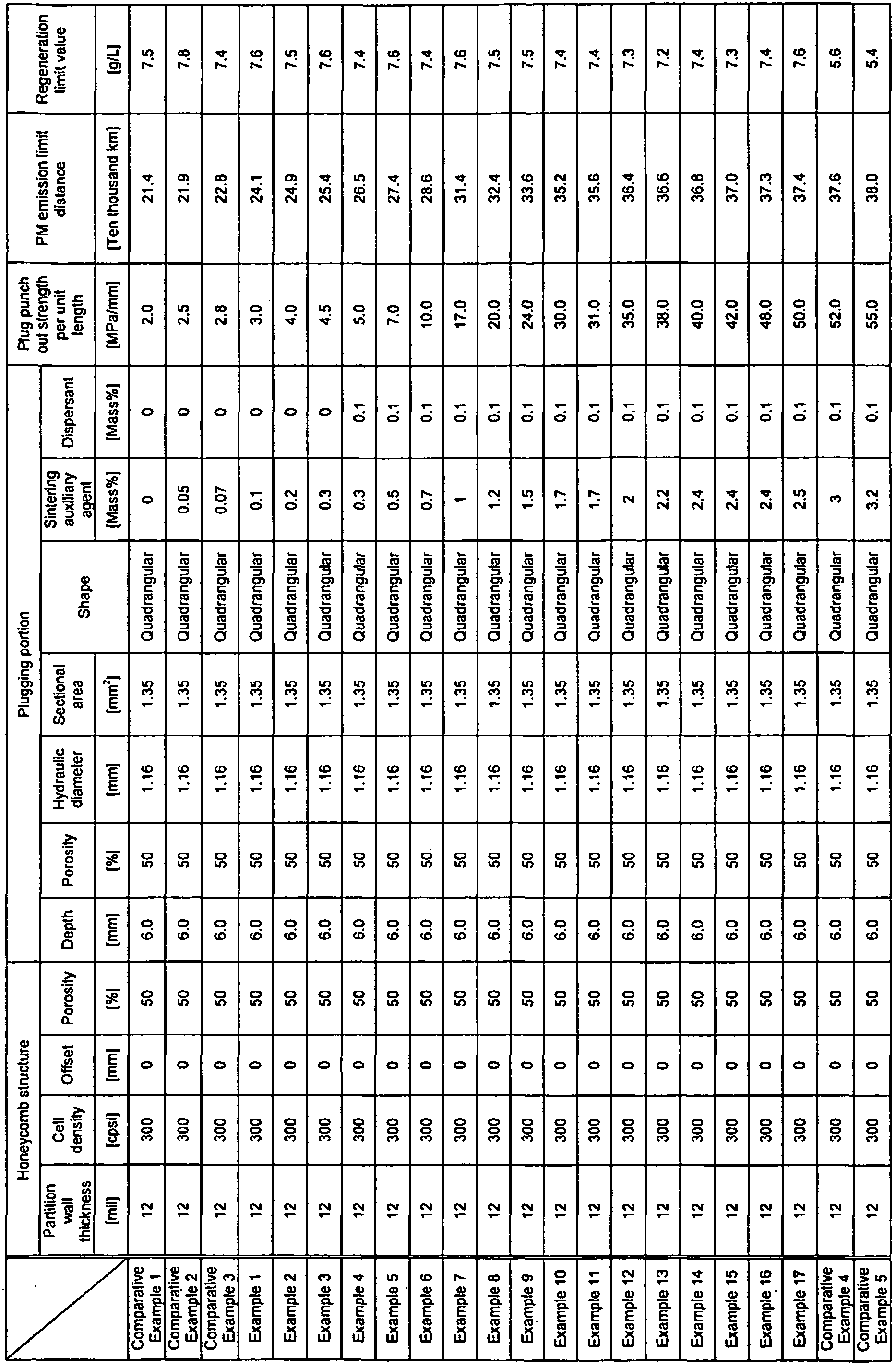

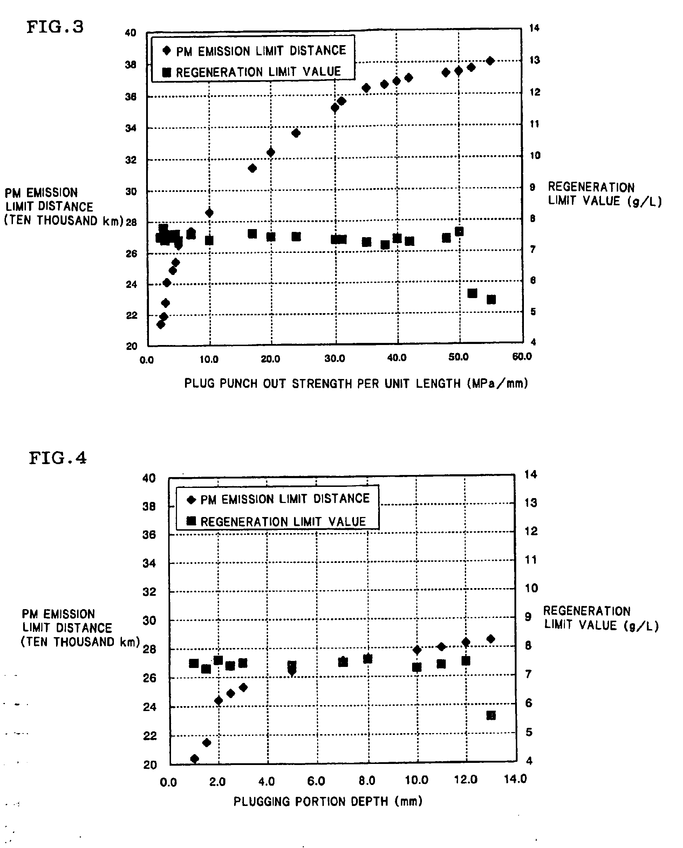

(Discussion 1) From the results of Examples 1 to 17 and Comparative Examples 1 to 5, a relation between the plug punch out strength per unit length and the PM emission limit distance and a relation between the plug punch out strength per unit length and the regeneration limit value are shown in Fig. 3. As seen from the result shown in Table 1 and Fig. 3, when the plug punch out strength per unit length was 3.0 MPa/mm, a speed at which the plugging portions were shaved by the iron balls in the erosion test was high, and the PM emission limit distance did not reach 240,000 km. On the other hand, when the plug punch out strength per unit length was larger than 50 MPa/mm, the plugging portions had an excessively high strength, cracks were generated from the plugging portions as start points in the regeneration limit test, and the regeneration limit value was 6 g/L or less. When the plug punch out strength per unit length was 50 MPa/mm or less, the plugging portions were not the start points, the cracks were rather generated from a honeycomb structure (partition walls) as the start point, and the regeneration limit value exceeded 6 g/L and was in a range of 7.2 to 7.8 g/L.

### (Examples 18 to 24 and Comparative Examples 6, 7)

The shape of a die for extrusion-forming was changed, and a plugged honeycomb structure including a cell having a quadrangular or octagonal (sectional) shape and an adjacent cell having an octagonal or quadrangular (sectional) shape was prepared. Then, this cell shape was changed to change the hydraulic diameters and sectional areas of plugging portions. During an erosion test and a regeneration limit test, an end face including quadrangular plugging portions was an inlet end face, and an end face including octagonal plugging portions was an outlet end face. Except these conditions, in the same manner as in Example 1, plugged honeycomb structures were prepared, a plug punch out strength per unit length was measured, and the erosion test and the regeneration limit test were performed. Table 2 shows the plug punch out strength per unit length, the result (the PM emission limit distance) of the erosion test and the result (the regeneration limit value) of the regeneration limit test together with the partition wall thickness, the cell density, the offset and the porosity of each honeycomb structure, the depth, the porosity, the hydraulic diameter, the sectional area and the (sectional) shape of each plugging portion, the amount of a sintering auxiliary agent used in a plugging slurry and the amount of a dispersant used in the plugging slurry.

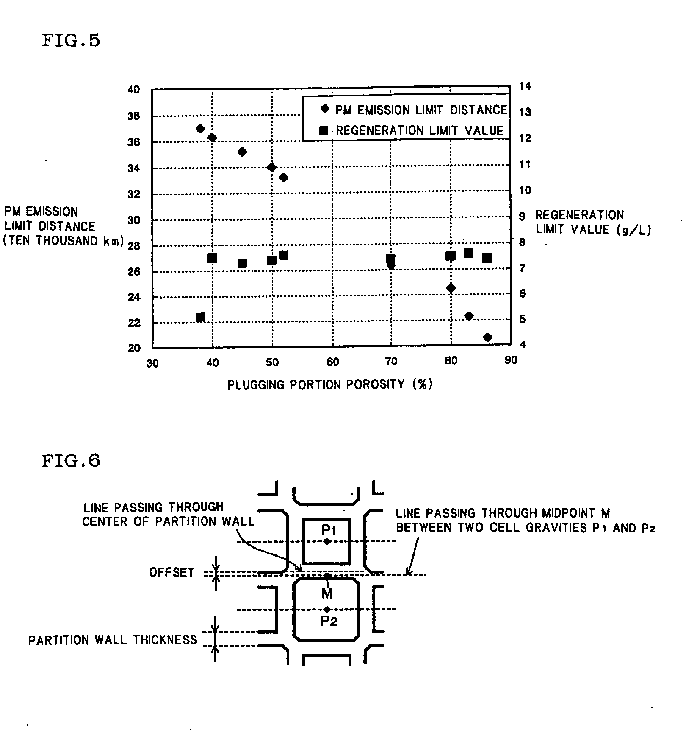

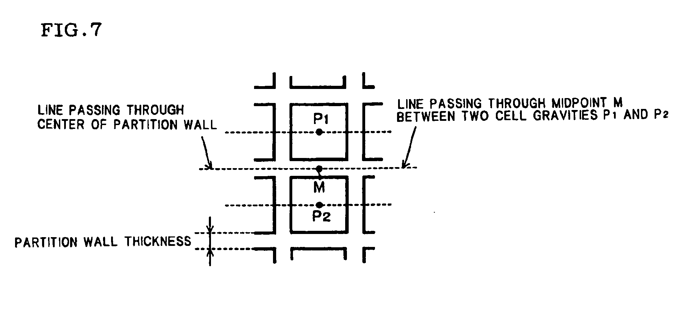

It is to be noted that the offset is a distance from a midpoint of the gravity centers between two adjacent cells appearing in an end face to the center of a partition wall between two cells. Figs. 6 and 7 are diagrams mainly for explaining the offset. Fig. 6 of these drawings is a front view (a diagram showing an end face) showing an enlarged part of a plugged honeycomb structure including cells having octagonal and quadrangular shapes, and Fig. 7 is a front view (a diagram showing an end face) showing an enlarged part of a plugged honeycomb structure including cells having only quadrangular shapes. As shown in Figs. 6 and 7, when the cells have the octagonal and quadrangular shapes (different shapes), the midpoint of the gravity centers between two adjacent cells appearing in the end face does not overlap with the center of the partition wall between the two cells, the distance is made, and the offset is not 0. On the other hand, when the cells have the only quadrangular shape (the same shape), the midpoint of the gravity centers between the two adjacent cells appearing in the end face overlaps with the center of the partition wall between the two cells, and at this time, the offset is 0.

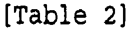

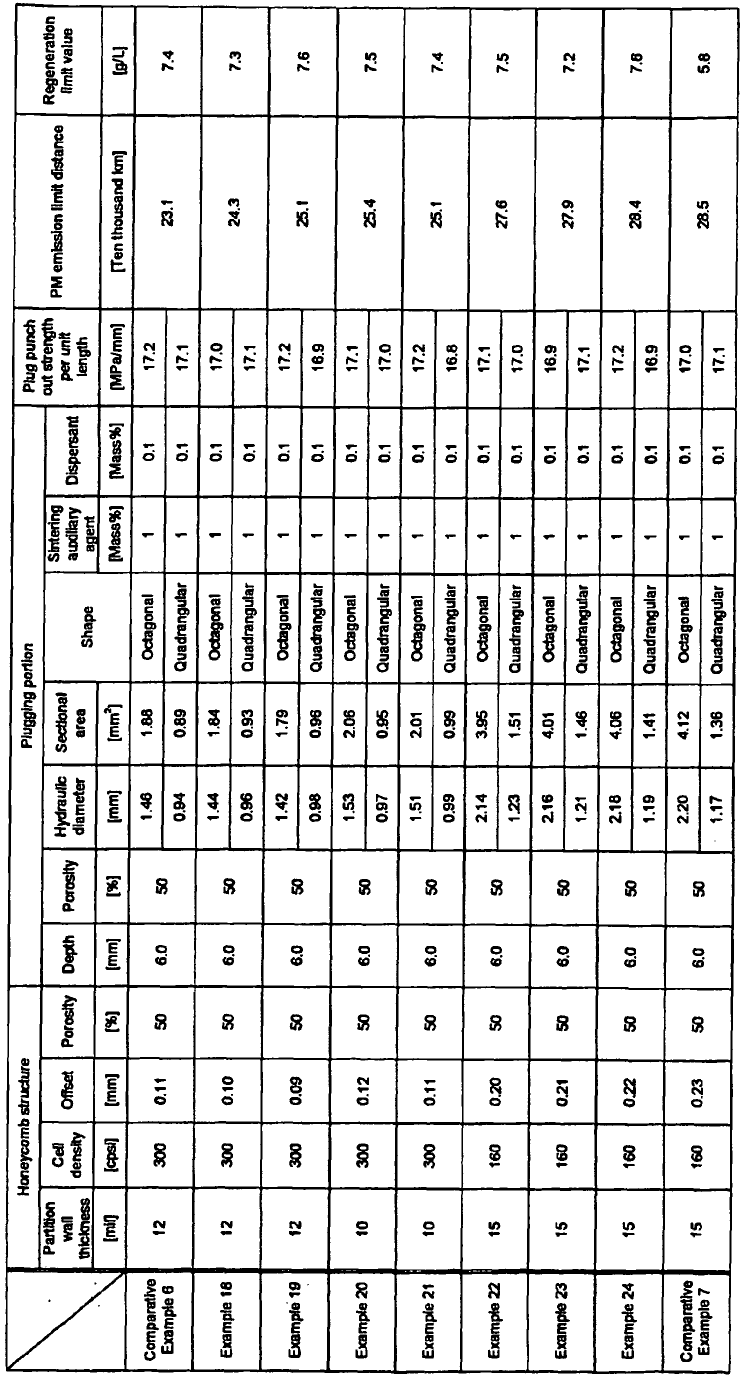

(Discussion 2) As seen from the result shown in Table 2, when the hydraulic diameter of the plugging portion was smaller than 0.95 mm or when the sectional area of the plugging portion was smaller than 0.90 mm², the volume of the plugging portion was small, a speed at which the plugging portions were shaved by the iron balls was therefore high, and the PM emission limit distance did not reach 240,000 km. When the hydraulic diameter of the plugging portion was 2.20 mm or more or when the sectional area of the plugging portion was 4.12 mm² or more, in the regeneration limit test, the ratio of the plugging portion area in the sectional area of the DPF was excessively large, the plugging portions had high rigidity, and hence cracks were generated from the plugging portions as start points. When the hydraulic diameter of the plugging portion was less than 2.20 mm and the sectional area of the plugging portion was less than 4.12 mm², the cracks were generated from a honeycomb structure as the start point. In each test, the regeneration limit value was a value around 7.5 g/L.

### (Examples 25 to 34 and Comparative Examples 8, 9)

When openings of cells in one end face of a honeycomb structure were immersed into a plugging slurry, the amount of the plugging slurry received in a container was adjusted to appropriately change the lengths (depths) of the cells to be immersed, thereby varying the depths of plugging portions of a plugged honeycomb structure. Except these conditions, in the same manner as in Example 7, the plugged honeycomb structure was prepared, a plug punch out strength per unit length was measured, and an erosion test and a regeneration limit test were performed. Table 3 shows the plug punch out strength per unit length, the result (the PM emission limit distance) of the erosion test and the result (the regeneration limit value) of the regeneration limit test together with the partition wall thickness, the cell density, the offset and the porosity of each honeycomb structure, the depth, the porosity, the hydraulic diameter, the sectional area and the (sectional) shape of each plugging portion, the amount of a sintering auxiliary agent used in the plugging slurry and the amount of a dispersant used in the plugging slurry.

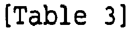

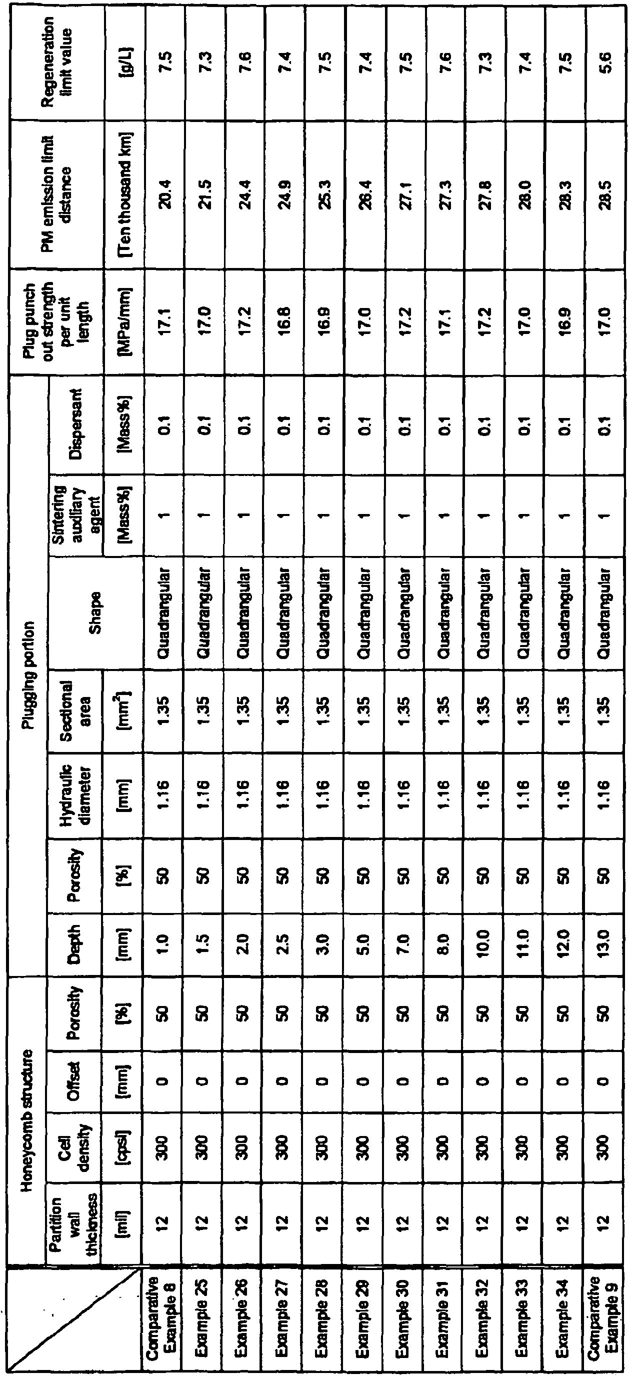

(Discussion 3) From the results of Examples 25 to 34 and Comparative Examples 8 and 9, a relation between the plugging portion depth and the PM emission limit distance and a relation between the plugging portion depth and the regeneration limit value are shown in Fig. 4. As seen from the results shown in Table 3 and Fig. 4, when the depths of the plugging portions were smaller than 2 mm, the PM emission limit distance did not reach 240,000 km in the erosion test. On the other hand, when the depths of the plugging portions were larger than 12 mm, the rigidities of the plugging portions increased. In the regeneration limit test, cracks were generated from the plugging portions as start points, and the regeneration limit value was 6 g/L or less. When the depths of the plugging portions were 12 mm or less, the cracks were generated from the honeycomb structure as a start point, and in each test, the regeneration limit value was a value around 7.5 g/L.

(Examples 35 to 40 and Comparative Examples 10 to 12) The amount of a pore former used in a plugging slurry was appropriately changed, a plug punch out strength per unit length was set to a substantially fixed value, and the porosity of each plugging portion was varied. Except these conditions, in the same manner as in Example 7, a plugged honeycomb structure was prepared, the plug punch out strength per unit length was measured, and an erosion test and a regeneration limit test were performed. Table 4 shows the plug punch out strength per unit length, the result (the PM emission limit distance) of the erosion test and the result (the regeneration limit value) of the regeneration limit test together with the partition wall thickness, the cell density, the offset and the porosity of each honeycomb structure, the depth, the porosity, the hydraulic diameter, the sectional area and the (sectional) shape of each plugging portion, the amount of a sintering auxiliary agent used in the plugging slurry and the amount of a dispersant used in the plugging slurry.

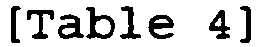

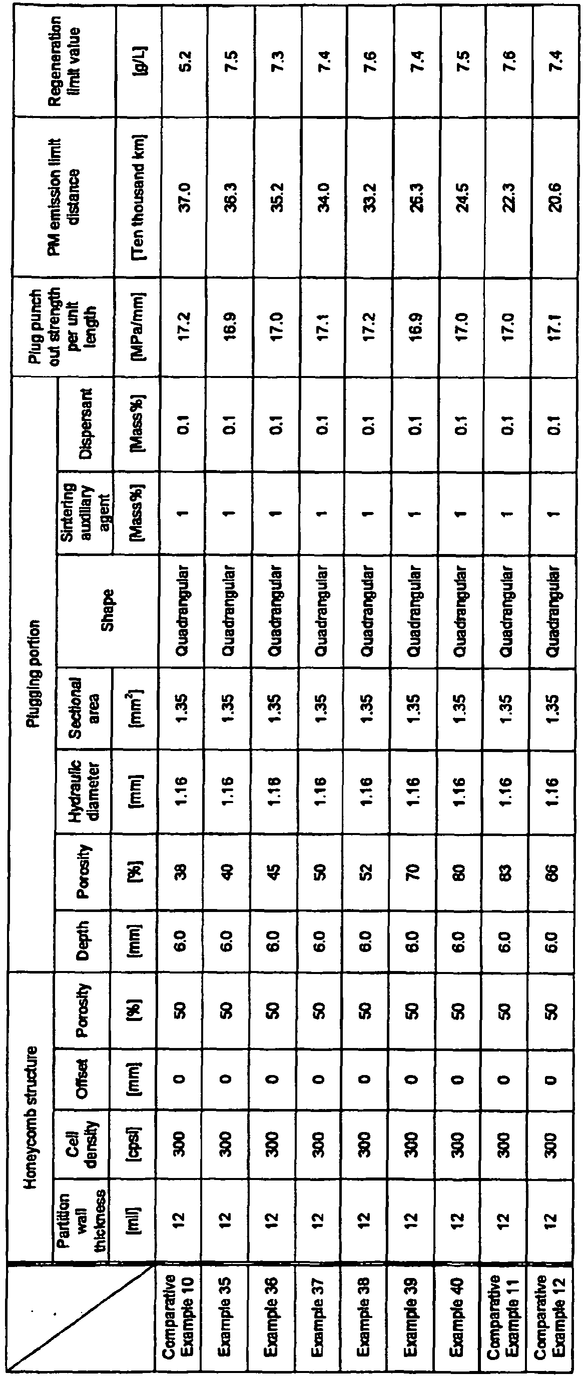

(Discussion 4) From the results of Examples 35 to 40 and Comparative Examples 10 to 12, a relation between the plugging portion porosity and the PM emission limit distance and a relation between the plugging portion porosity and the regeneration limit value are shown in Fig. 5. As seen from the results shown in Table 4 and Fig. 5, when the porosities of the plugging portions were larger than 80%, the amount of the plugging portions (corresponding to a value obtained by plugging portion volume × plugging portion porosity) was small, and hence the PM emission limit distance did not reach 240,000 km in the erosion test. On the other hand, when the porosities of the plugging portions were smaller than 40%, the rigidities of the plugging portions increased. In the regeneration limit test, cracks were generated from the plugging portions as start points so as to push and break the honeycomb structure, and the regeneration limit value was 6 g/L or less.

A plugged honeycomb structure according to the present invention can preferably be used as a diesel particulate filter.

## Claims

1. A plugged honeycomb structure comprising: a columnar honeycomb structure having porous partition walls forming a plurality of cells which passes through two end faces to each other; and plugging portions which plug the cells in the end faces,
wherein the plugging portions have depths of 2.0 mm or more and 12 mm or less,
plug punch out strengths per unit length in a range of 3 MPa/mm or more and 50 MPa/mm or less,
hydraulic diameters of 0.95 mm or more and less than 2.20 mm and
porosities of 40% or more and 80% or less.

2. The plugged honeycomb structure according to claim 1, wherein the plugging portions have sectional areas of 0.90 mm² or more and less than 4.12 mm².

3. The plugged honeycomb structure according to claim 1 or 2, wherein the plugging portions are bonded to the partition walls with a length of 50% or more of the depth of each plugging portion.

4. The plugged honeycomb structure according to any one of claims 1 to 3, wherein the two end faces have different cell sizes and/or different cell shapes.

5. The plugged honeycomb structure according to any one of claims 1 to 4, wherein the plugging portions which plug the cells in the end faces are obtained by filling the cells with a plugging slurry containing a sintering auxiliary agent including one or more elements selected from the group consisting of alkali earth metals, Al, Si and Fe and 0.1 mass% or more of an added dispersant, and then drying and/or firing the structure.

6. A diesel particulate filter in which the plugged honeycomb structure according to any one of claims 1 to 5 is used.

## Patentansprüche

1. Verschlossene Wabenstruktur, die Folgendes umfasst: eine säulenförmige Wabenstruktur mit porösen Trennwänden, die ein Vielzahl von Zellen bilden, die durch zwei Endflächen verlaufen, und Verschlussabschnitte, die die Zellen an den Endflächen verschließen,
worin die Verschlussabschnitte eine Tiefe von 2,0 mm oder mehr und 12 mm oder weniger aufweisen,
die Ausstanzfestigkeit der Verschlüsse pro Längeneinheit in einem Bereich von 3 MPa/mm oder mehr und 50 MPa/mm oder weniger liegt,
die hydraulischen Durchmesser 0,95 mm oder mehr und weniger als 2,20 mm betragen und
die Porosität 40 % oder mehr und 80 % oder weniger beträgt.

2. Verschlossene Wabenstruktur nach Anspruch 1, worin die Verschlussabschnitte Querschnittsflächen von 0,90 mm² oder mehr und weniger als 4,12 mm² aufweisen.

3. Verschlossene Wabenstruktur nach Anspruch 1 oder 2, worin die Verschlussabschnitte entlang einer Länge von 50 % oder mehr der Tiefe jedes Verschlussabschnitts haftschlüssig mit den Trennwänden verbunden sind.

4. Verschlossene Wabenstruktur nach einem der Ansprüche 1 bis 3, worin die beiden Endflächen unterschiedliche Zellgrößen und/oder unterschiedliche Zellformen aufweisen.

5. Verschlossene Wabenstruktur nach einem der Ansprüche 1 bis 4, worin die Verschlussabschnitte, die die Zellen an den Endflächen verschließen, dadurch erhalten werden, dass die Zellen mit einer Verschlussaufschlämmung gefüllt werden, die ein Sinterhilfsmittel enthält, das ein oder mehrere aus der aus Erdalkalimetallen, Al, Si und Fe bestehenden Gruppe ausgewählte Elemente und 0,1 Gew.-% oder mehr eines zugesetzten Dispersionsmittels umfasst, und die Struktur anschließend getrocknet und/oder gebrannt wird.

6. Dieselpartikelfilter, in dem eine verschlossene Wabenstruktur nach einem der Ansprüche 1 bis 5 verwendet wird.

## Revendications

1. Structure de nid d'abeilles obturée comprenant : une structure de nid d'abeilles colonnaire ayant des parois de séparation poreuses formant une pluralité de cellules qui traverse deux faces terminales mutuellement ; et des parties d'obturation qui obturent les cellules dans les faces terminales,
dans laquelle les parties d'obturation ont des profondeurs de 2,0 mm ou plus et 12 mm ou moins,
des résistances à la perforation par unité de longueur dans une plage de 3 MPa/mm ou plus à 50 MPa/mm ou moins,
des diamètres hydrauliques de 0,95 mm ou plus et de moins de 2,20 mm et des porosités de 40 % ou plus et 80 % ou moins.

2. Structure de nid d'abeilles obturée selon la revendication 1, dans laquelle les parties d'obturation ont des aires de section transversale de 0,90 mm² ou plus et inférieures à 4,12 mm².

3. Structure de nid d'abeilles obturée selon la revendication 1 ou 2, dans laquelle les parties d'obturation sont collées aux parois de séparation avec une longueur de 50 % ou plus de la profondeur de chaque partie d'obturation.

4. Structure de nid d'abeilles obturée selon l'une quelconque des revendications 1 à 3, dans laquelle les deux faces terminales ont des tailles de cellule différentes et/ou des formes de cellule différentes.

5. Structure de nid d'abeilles obturée selon l'une quelconque des revendications 1 à 4, dans laquelle les parties d'obturation qui obturent les cellules dans les faces terminales sont obtenues en remplissant les cellules avec une suspension concentrée d'obturation contenant un agent auxiliaire de frittage comprenant un ou plusieurs éléments choisis dans le groupe constitué de métaux alcalino-terreux, Al, Si, et Fe et 0,1 % en masse ou plus d'un dispersant ajouté, et ensuite séchage et/ou cuisson de la structure.

6. Filtre à particules diesel dans lequel la structure de nid d'abeilles obturée selon l'une quelconque des revendications 1 à 5 est utilisée.
